(19) Europäisches Patentamt
European Patent Office
Office européen des brevets

(11) EP 4 183 901 A1

(12) EUROPEAN PATENT APPLICATION
published in accordance with Art. 153(4) EPC

(43) Date of publication:
**24.05.2023 Bulletin 2023/21**

(21) Application number: **21842918.1**

(22) Date of filing: **16.06.2021**

(51) International Patent Classification (IPC):
***C25B 11/091*** *(2021.01)* ***B01J 23/755*** *(2006.01)*
***C01B 3/02*** *(2006.01)* ***C25B 1/04*** *(2021.01)*
***C25B 9/00*** *(2021.01)* ***C25B 11/054*** *(2021.01)*
***C25B 11/055*** *(2021.01)* ***C25B 11/061*** *(2021.01)*
***C25B 11/071*** *(2021.01)*

(52) Cooperative Patent Classification (CPC):
**B01J 23/755; C01B 3/02; C25B 1/04; C25B 9/00; C25B 11/054; C25B 11/055; C25B 11/061; C25B 11/071; C25B 11/091;** Y02E 60/36

(86) International application number:
**PCT/JP2021/022952**

(87) International publication number:
**WO 2022/014242 (20.01.2022 Gazette 2022/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.07.2020 JP 2020122906**

(71) Applicant: **PANASONIC INTELLECTUAL PROPERTY MANAGEMENT CO., LTD.**
**Chuo-ku**
**Osaka-shi**
**Osaka 540-6207 (JP)**

(72) Inventors:
- **SHIRATAKI Hiroshi**
  **Chuo-ku, Osaka-shi, Osaka 540-6207 (JP)**
- **HAYASHI Takao**
  **Chuo-ku, Osaka-shi, Osaka 540-6207 (JP)**
- **MURASE Hideaki**
  **Chuo-ku, Osaka-shi, Osaka 540-6207 (JP)**
- **SUZUKA Michio**
  **Chuo-ku, Osaka-shi, Osaka 540-6207 (JP)**

(74) Representative: **Grünecker Patent- und Rechtsanwälte**
**PartG mbB**
**Leopoldstraße 4**
**80802 München (DE)**

# (54) ELECTRODE CATALYST FOR WATER ELECTROLYSIS CELLS, WATER ELECTROLYSIS CELL, AND WATER ELECTROLYSIS DEVICE

(57) An electrode catalyst for a water electrolysis cell includes a catalyst, a support, and an organic compound. The catalyst is a layered double hydroxide that contains a chelating agent. The support contains a transition metal. The organic compound has an anionic functional group.

FIG. 1

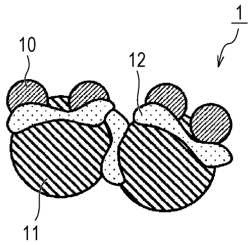




Processed by Luminess, 75001 PARIS (FR)

## Description

### Technical Field

The present disclosure relates to an electrode catalyst for a water electrolysis cell and also relates to water electrolysis cells and water electrolysis devices.

### Background Art

In recent years, the development of a catalyst material that is used in a water electrolysis device has been expected.

Non-Patent Literature 1 discloses a Ni-Fe layered double hydride (Ni-Fe LDH).
Non-Patent Literature 2 discloses a composite of FeOOH nanoparticles and a Ni-Fe LDH.

### Citation List

### Non Patent Literature

NPL 1: Seyeong Lee et al., "Operational durability of three-dimensional Ni-Fe layered double hydroxide electrocatalyst for water oxidation," Electrochimica Acta, 2019, Vol. 315, pp.94-101
NPL 2: Jiande Chen et al., "Interfacial Interaction between FeOOH and Ni-Fe LDH to Modulate the Local Electronic Structure for Enhanced OER Electrocatalysis," ACS Catalysis, 2018, Vol. 8, pp.11342-11351

### Summary of Invention

### Technical Problem

The present disclosure provides an electrode catalyst for a water electrolysis cell, and the electrode catalyst has high durability.

### Solution to Problem

An aspect of the present disclosure provides an electrode catalyst for a water electrolysis cell. The electrode catalyst includes a catalyst, a support, and an organic compound. The catalyst is a layered double hydroxide that contains a chelating agent. The support contains a transition metal. The organic compound has an anionic functional group.

### Advantageous Effects of Invention

With the present disclosure, an electrode catalyst for a water electrolysis cell can be provided, with the electrode catalyst having high durability.

### Brief Description of Drawings

[Fig. 1] Fig. 1 is a schematic diagram of an electrode catalyst for a water electrolysis cell, according to a first embodiment.
[Fig. 2] Fig. 2 is a schematic diagram of an exemplary crystal structure of a portion of an LDH.
[Fig. 3] Fig. 3 is a schematic cross-sectional view of an exemplary water electrolysis cell, according to a second embodiment.
[Fig. 4] Fig. 4 is a schematic cross-sectional view of an exemplary water electrolysis device, according to a third embodiment.
[Fig. 5] Fig. 5 is a schematic cross-sectional view of another exemplary water electrolysis cell, according to a fourth embodiment.
[Fig. 6] Fig. 6 is a schematic cross-sectional view of another exemplary water electrolysis device, according to a

fifth embodiment.

Description of Embodiments

(Underlying Knowledge Forming Basis of the Present Disclosure)

A step for combating global warming that is attracting attention is the utilization of renewable energy, such as solar power or wind power. However, power generation that uses renewable energy presents a problem in that the excess electrical power goes to waste. That is, the renewable energy is not necessarily utilized with sufficient efficiency. Correspondingly, studies are being conducted regarding methods for producing hydrogen from excess electrical power and storing the hydrogen.

A typical method for producing hydrogen from excess electrical power may be the electrolysis of water. The electrolysis of water is also referred to as water electrolysis. It is desired that a highly efficient and long-lasting water electrolysis device be developed so that hydrogen can be produced inexpensively and consistently. Principal constituent elements of a water electrolysis device include a membrane electrode assembly (MEA), which is formed of a gas diffusion layer, a catalyst, and an electrolyte membrane.

Providing a highly efficient and long-lasting water electrolysis device requires, in particular, improvements in the performance and durability of the catalyst. Layered double hydroxides (LDHs) that contain a transition metal exhibit excellent catalytic activity. Accordingly, utilization of an LDH as a catalyst material has attracted attention in recent years. However, as indicated in Non-Patent Literature 1, a problem is presented in that application of voltage to the catalyst decreases catalytic performance, which increases overvoltage. This is believed to be because the application of voltage changes a shape of the Ni-Fe LDH, which causes the Ni-Fe LDH to be separated from a support. An important point for ensuring that a Ni-Fe LDH has high durability is to inhibit the separation of the Ni-Fe LDH from a support.

The present inventors performed studies and newly discovered that in instances where an LDH that contains a chelating agent is used as the catalyst, catalytic activity is enhanced. However, even with such a catalyst, the catalytic performance may decrease if the catalyst is separated from the support. In view of this, the present inventors diligently performed studies to develop a technology for inhibiting a catalyst that is an LDH that contains a chelating agent form being separated from a support. As a result, it was newly discovered that using a specific organic compound is advantageous. Based on the finding, the present inventors discovered an electrode catalyst for a water electrolysis cell, which is disclosed in the present disclosure.

(Overview of Aspects of Present Disclosure)

According to a first aspect of the present disclosure, an electrode catalyst for a water electrolysis cell includes:

a catalyst, the catalyst being a layered double hydroxide that contains a chelating agent;
a support that contains a transition metal; and
an organic compound that has an anionic functional group.

With regard to the first aspect, an electrode catalyst for a water electrolysis cell can be provided, with the electrode catalyst having high durability.

In a second aspect of the present disclosure, for example, in the electrode catalyst for a water electrolysis cell according to the first aspect, the anionic functional group may include a sulfonic acid ionic group.

In a third aspect of the present disclosure, for example, in the electrode catalyst for a water electrolysis cell according to the first aspect, the anionic functional group may include a carboxylic acid ionic group.

With regard to the second and third aspects, the organic compound enables a desired attractive force to be generated between the organic compound and the LDH and between the organic compound and the support.

In a fourth aspect of the present disclosure, for example, in the electrode catalyst for a water electrolysis cell according to the first aspect, the organic compound may include a perfluorocarbon polymer having a sulfonic acid ionic group. With this configuration, a withstand voltage of the electrode catalyst is further improved.

In a fifth aspect of the present disclosure, for example, in the electrode catalyst for a water electrolysis cell according to any one of the first to fourth aspects, the layered double hydroxide may contain Ni and Fe. With this configuration, the LDH can have higher catalytic activity.

In a sixth aspect of the present disclosure, for example, in the electrode catalyst for a water electrolysis cell according to any one of the first to fifth aspects, the transition metal may include Ni. With this configuration, the electrode catalyst can have high durability against alkalis.

According to a seventh aspect of the present disclosure, a water electrolysis cell includes:

an anode;
a cathode; and
an electrolyte membrane disposed between the anode and the cathode.

At least one selected from the group consisting of the anode and the cathode includes the electrode catalyst according to any one of the first to sixth aspects.
With regard to the seventh aspect, the water electrolysis cell can have high durability.
In an eighth aspect of the present disclosure, for example, in the water electrolysis cell according to the seventh aspect, the electrolyte membrane may include a proton exchange membrane.
In a ninth aspect of the present disclosure, for example, in the water electrolysis cell according to the seventh aspect, the electrolyte membrane may include an anion exchange membrane.
With regard to the eighth and ninth aspects, oxygen gas generated at the anode and hydrogen gas generated at the cathode do not easily mix with each other.
According to a tenth aspect of the present disclosure, a water electrolysis cell includes:

a diaphragm that separates a first space from a second space;
an anode provided in the first space; and
a cathode provided in the second space.

At least one selected from the group consisting of the anode and the cathode includes the electrode catalyst according to any one of the first to sixth aspects.
With regard to the tenth aspect, the water electrolysis cell can have high durability.
According to an eleventh aspect of the present disclosure, a water electrolysis device includes:

the water electrolysis cell according to any one of the seventh to tenth aspects; and
a voltage applicator that applies a voltage between the anode and the cathode, the voltage applicator being connected to the anode and the cathode.

With regard to the eleventh aspect, the water electrolysis device can have high durability.
Embodiments of the present disclosure will now be described with reference to the drawings. The present disclosure is not limited to the embodiments described below.

(First Embodiment)

Fig. 1 is a schematic diagram of an electrode catalyst for a water electrolysis cell, according to the present embodiment. An electrode catalyst 1, according to the present embodiment, includes a catalyst 10, a support 11, and an organic compound 12. The catalyst 10 is an LDH that contains a chelating agent. The support 11 contains a transition metal. For example, the organic compound 12 has an anionic functional group and is present on a surface of the catalyst 10, which is supported on the support 11. With this configuration, the electrode catalyst 1 can have high durability.

[Catalyst]

For example, the catalyst 10 contains two or more transition metals and a chelating agent. The transition metals include at least two selected from the group consisting of V, Cr, Mn, Fe, Co, Ni, Cu, W, and Ru, for example.
For example, the catalyst 10 is an LDH having a composition represented by composition formula (1) below, with which a chelating agent coordinates.

$$[M_1{}^{2+}{}_{1-x}M_2{}^{3+}{}_x(OH)_2][yA^{n-}\cdot mH_2O] \ldots \qquad \text{Composition formula (1)}$$

In composition formula (1), $M_1{}^{2+}$ is an ion of a divalent transition metal. $M_2{}^{3+}$ is an ion of a trivalent transition metal. $A^{n-}$ is an anion present between layers. x is a rational number satisfying the condition of $0 < x < 1$. y is a number corresponding to an amount necessary for a charge balance. n is an integer. m is an appropriate rational number.
The LDH may contain Ni and Fe. In composition formula (1), $M_1$ may be Ni, and $M_2$ may be Fe. That is, the transition metal elements included in the catalyst 10 may be Ni and Fe. With this configuration, the electrode catalyst 1 can have a higher catalytic activity than, for example, a Co-Fe LDH.
The catalyst 10 is an LDH that contains a chelating agent. Consequently, the catalyst 10 has improved dispersion stability. Furthermore, the presence of a chelating agent in the catalyst 10 may enable the synthesized catalyst 10 to have a small particle diameter. As a result, the catalyst 10 can have an improved surface area, which in turn can improve

catalytic activity. The catalyst 10 may have an average particle diameter of less than or equal to 100 nm, less than or equal to 50 nm, or less than or equal to 10 nm. The average particle diameter of the catalyst 10 is a value determined as follows. A particle size distribution of the catalyst 10, which is obtained by small angle X-ray scattering (SAXS), is represented in a two-dimensional distribution graph that shows a relationship between the particle diameter and the distribution, and the area in the two-dimensional distribution graph is divided by the total number of the particles. The distribution indicates numerical values proportional to the total volume of the particle number of a corresponding particle diameter. The area in the two-dimensional distribution graph is, for example, the product of a particle diameter and the number of particles corresponding to the particle diameter.

The chelating agent is not limited to any particular chelating agent. For example, the chelating agent is an organic compound that coordinates with a transition metal in the LDH. The chelating agent may be at least one selected from bidentate organic ligands and tridentate organic ligands. Examples of the chelating agent include β-diketones, β-ketoesters, and hydroxycarboxylic acids. Examples of the β-diketones include acetylacetone (ACAC), trifluoroacetylacetone, hexafluoroacetylacetone, benzoylacetone, thenoyltrifluoroacetone, dipilovaylmethane, dibenzoylmethane, and ascorbic acid. Examples of the β-ketoesters include methyl acetoacetate, ethyl acetoacetate, allyl acetoacetate, benzyl acetoacetate, n-propyl acetoacetate, isopropyl acetoacetate, n-butyl acetoacetate, isobutyl acetoacetate, tert-butyl acetoacetate, 2-methoxyethyl acetoacetate, and methyl 3-oxopentanoate. Examples of the hydroxycarboxylic acids and salts thereof include tartaric acid, citric acid, malic acid, gluconic acid, ferulic acid, lactic acid, glucuronic acid, and salts thereof. The chelating agent may include at least one selected from the group consisting of acetylacetone and trisodium citrate. The chelating agent may be at least one selected from acetylacetone and trisodium citrate.

$A^{n-}$ is an interlayer anion. $A^{n-}$ is an inorganic ion or an organic ion. Examples of the inorganic ion include $CO_3^{2-}$, $NO_3^-$, $Cl^-$, $SC_4^{2-}$, $Br^-$, $OH^-$, $F^-$, $I^-$, $Si_2O_5^{2-}$, $B_4O_5(OH)_4^{2-}$, and $PO_4^{3-}$. Examples of the organic ion include $CH_3(CH_2)_nSO^{4-}$, $CH_3(CH_2)_nCOO^-$, $CH_3(CH_2)_nPO^{4-}$, and $CH_3(CH_2)_nNO^{3-}$. $A^{n-}$ is an anion intercalated between the layers of the metal hydroxide together with water molecules. $A^{n-}$ has a charge and an ionic size, which are not limited to any particular value. The catalyst 10 may include one type of $A^{n-}$ or two or more types of $A^{n-}$.

Fig. 2 is a schematic diagram of an exemplary crystal structure of a portion of an LDH represented by composition formula (1). As illustrated in Fig. 2, a crystal structure 20 includes an $OH^-$ ion on each of the vertices of octahedra, in which $M_1^{2+}$ or $M_2^{3+}$ is the center. The metal hydroxide is represented by $[M_1^{2+}{}_{1-x}M_2^{3+}{}_x(OH)_2]^{x+}$. The metal hydroxide has a layered structure in which hydroxide octahedra are two-dimensionally connected to one another with edges thereof being shared. The anion and water molecules are positioned between the layers of the metal hydroxide. The layers of the metal hydroxide serve as host layers 21, between which the anion and water molecules, which serve as guest layers 22, are intercalated. That is, the crystal structure 20, as a whole, has a sheet structure in which the host layers 21, which are formed of the metal hydroxide, and the guest layers 22, which are formed of the anion and water molecules, are alternately layered. The crystal structure 20 has a structure in which some of the $M_1^{2+}$ present in the layers of the metal hydroxide is replaced by the $M_2^{3+}$. Accordingly, a surface of the crystal structure 20 is typically positively charged.

[Organic Compound that has Anionic Functional Group]

The organic compound 12, which has an anionic functional group, is, for example, an organic compound that can be present on a surface of the catalyst 10 supported on the support 11. Furthermore, the organic compound 12 is, for example, an organic compound that can be present between the catalyst 10 and the support 11 and between the supports 11. The organic compound 12 can be an organic binder. In the organic compound 12, the anionic functional group may be present in a main chain or a side chain. The presence of the anionic functional group in the organic compound 12 enables, for example, an attractive force due to electrostatic interaction to be generated with respect to the catalyst 10 and the support 11. Consequently, even in instances where a voltage is applied to the electrode catalyst 1, the catalyst 10 is not easily separated from the support 11. As a result, an increase in the overvoltage is inhibited, and, therefore, the electrode catalyst 1 has high durability.

The attractive force that is generated between the organic compound 12 and the catalyst 10 and between the organic compound 12 and the support 11 is a Coulomb force, for example. The use of the organic compound 12 enables a Coulomb force to be generated between the catalyst 10 and the organic compound 12 and between the support 11 and the organic compound 12. The Coulomb force can inhibit the separation between the catalyst 10 and the support 11. The Coulomb force, denoted as ΔE, is represented by the following equation.

[Math. 1]

$$\Delta E = \frac{1}{4\pi\varepsilon_0} \cdot \frac{q_+ q_-}{r}$$

In the equation, $\varepsilon_0$ represents the dielectric constant of a vacuum. $q_+$ and q. represent an amount of charge of charged particles. r represents a distance between charged particles.

The Coulomb force provides an attractive force between the support 11 and the organic compound 12 and between the catalyst 10 and the organic compound 12. Consequently, even in instances where a voltage is applied to the electrode catalyst 1, the catalyst 10 is not easily separated from the support 11. Thus, the electrode catalyst 1 can have higher durability.

The anionic functional group is not limited to any particular type. Examples of the anionic functional group include sulfonic acid ionic groups, carboxylic acid ionic groups, acetic acid ionic groups, citric acid ionic groups, lactic acid ionic groups, glycolic acid ionic groups, phosphoric acid ionic groups, nitric acid ionic groups, and alkyl sulfonic acid ionic groups. At least one selected from the group consisting of sulfonic acid ionic groups and carboxylic acid ionic groups may be included as the anionic functional group. The anionic functional group may include a sulfonic acid ionic group. The anionic functional group may be a sulfonic acid ionic group. The anionic functional group may include a carboxylic acid ionic group. The anionic functional group may be a carboxylic acid ionic group. Consequently, it is likely that a desired attractive force is generated between the organic compound 12 and the catalyst 10 and between the organic compound 12 and the support 11.

The organic compound 12 may be an organic compound containing fluorine. The organic compound 12 may be an organic polymer having fluorine and a sulfonic acid ionic group. The organic compound 12 may include a perfluorocarbon polymer having a sulfonic acid ionic group. The organic compound 12 may be a perfluorocarbon polymer having a sulfonic acid ionic group. Since fluorine has an organic effect, the presence of fluorine in the organic compound improves the thermal stability and electrochemical stability of the organic compound 12. In addition, the presence of fluorine in the organic compound further improves the withstand voltage of the electrode catalyst 1. Examples of the perfluorocarbon polymer having a sulfonic acid ionic group include Nafion (registered trademark). Nafion has the following chemical formula.

[Chem. 1]

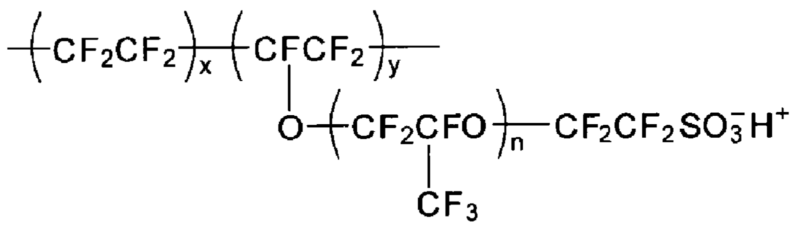

In the chemical formula, y/x satisfies $1 \leq y/x \leq 9$. n is an integer greater than or equal to 0 and less than or equal to 2.

[Support]

Typically, the support 11 has a conductivity. The support 11 is not limited to any particular material provided that the support 11 contains a transition metal. The support 11 can support the catalyst 10. For example, the organic compound 12 binds to the support 11 and the catalyst 10 via a Coulomb force. The support 11 may contain at least one selected from the group consisting of V, Cr, Mn, Fe, Co, Ni, Cu, W, and Ru. The support 11 may be at least one selected from the group consisting of V, Cr, Mn, Fe, Co, Ni, Cu, W, and Ru. A surface of the support 11 is positively charged under neutral conditions, for example. Accordingly, the support 11 and the organic compound 12 can bind to each other via a Coulomb force. In addition, the catalyst 10 and the organic compound 12 can bind to each other via a Coulomb force. Consequently, even in instances where a voltage is applied, the support 11 is not easily separated from the catalyst 10, and, therefore, degradation in catalytic performance can be further inhibited.

The support 11 may contain Ni. The support 11 may be Ni. With this configuration, the electrode catalyst 1 can have high durability against alkalis.

A shape of the support 11 is not limited to any particular shape. The shape of the support 11 may be a foam shape or a particle shape. When the shape of the support 11 is a particle shape, a particle diameter of the support 11 is not limited to any particular value. The particle diameter of the support 11 may be less than or equal to 100 nm or less than or equal to 50 nm. In these cases, a desired attractive force tends to be generated between the organic compound 12 and the support 11. In addition, even in instances where a voltage is applied, the support 11 is not easily separated from the catalyst 10, and, therefore, degradation in catalytic performance can be further inhibited. The particle diameter of the support 11 is a particle diameter measured by using a transmission electron microscope (TEM).
For example, the electrode catalyst 1 according to the present embodiment is used in a proton exchange membrane type water electrolysis device, an anion exchange membrane type water electrolysis device, or an alkali diaphragm type water electrolysis device. The electrode catalyst 1 may be used in at least one selected from an anode and a cathode in any of these water electrolysis devices.

(Second Embodiment)

Fig. 3 is a schematic cross-sectional view of an exemplary water electrolysis cell, according to the present embodiment.
A water electrolysis cell 2 includes an electrolyte membrane 31, an anode 100, and a cathode 200. The electrolyte membrane 31 is disposed between the anode 100 and the cathode 200, for example. At least one selected from the anode 100 and the cathode 200 includes the electrode catalyst 1, which is described in the first embodiment.
The electrolyte membrane 31 may be an electrolyte membrane having ionic conductivity. The electrolyte membrane 31 is not limited to any particular type. The electrolyte membrane 31 may include a proton exchange membrane. The electrolyte membrane 31 may be a proton exchange membrane. The electrolyte membrane 31 may include an anion exchange membrane. The electrolyte membrane 31 may be an anion exchange membrane. The electrolyte membrane 31 is configured such that oxygen gas generated at the anode 100 and hydrogen gas generated at the cathode 200 do not easily mix with each other.
The anode 100 includes a catalyst layer 30, for example. The catalyst layer 30 may be provided on one of major surfaces of the electrolyte membrane 31. The "major surfaces" refers to surfaces having the largest area of the electrolyte membrane 31. The catalyst layer 30 includes an electrode catalyst, which may be the electrode catalyst 1 of the first embodiment. The anode 100 may further include a gas diffusion layer 33, which is porous and conductive and may be provided on the catalyst layer 30.
The cathode 200 includes a catalyst layer 32, for example. The catalyst layer 32 may be provided on the other of the major surfaces of the electrolyte membrane 31. That is, the catalyst layer 32 may be provided on the major surface of the electrolyte membrane 31 opposite to the major surface on which the catalyst layer 30 is provided. The electrode catalyst that may be used in the catalyst layer 32 is not limited to any particular type. The electrode catalyst may be platinum or the electrode catalyst 1. The cathode 200 may further include a gas diffusion layer 34, which is porous and conductive and may be provided on the catalyst layer 32.
With any of the configurations described above, the water electrolysis cell 2 can have high durability; this is because at least one selected from the anode 100 and the cathode 200 includes the electrode catalyst 1.

(Third Embodiment)

Fig. 4 is a schematic cross-sectional view of an exemplary water electrolysis device, according to the present embodiment.
A water electrolysis device 3 includes a water electrolysis cell 2 and a voltage applicator 40. The water electrolysis cell 2 is similar to the water electrolysis cell 2 of the second embodiment, and, therefore, descriptions thereof will be omitted.
The voltage applicator 40 is connected to an anode 100 and a cathode 200 of the water electrolysis cell 2. The voltage applicator 40 is a device that applies a voltage between the anode 100 and the cathode 200 in the water electrolysis cell 2.
The voltage applicator 40 increases the potential of the anode 100 and decreases the potential of the cathode 200. The voltage applicator 40 is not limited to any particular type provided that the voltage applicator 40 can apply a voltage between the anode 100 and the cathode 200. The voltage applicator 40 may be a device that adjusts the voltage to be applied between the anode 100 and the cathode 200. Specifically, in instances where the voltage applicator 40 is connected to a DC power supply, such as a battery, a solar cell, or a fuel cell, the voltage applicator 40 includes a DC/DC converter. In instances where the voltage applicator 40 is connected to an AC power supply, such as a commercial power supply, the voltage applicator 40 includes an AC/DC converter. The voltage applicator 40 may be a power-type power supply that adjusts the voltage that is applied between the anode 100 and the cathode 200 and adjusts the current that flows between the anode 100 and the cathode 200, such that the power to be supplied to the water electrolysis

device 3 is adjusted to a predetermined set value.

With any of the configurations described above, the water electrolysis device 3 can have high durability.

(Fourth Embodiment)

Fig. 5 is a schematic cross-sectional view of another exemplary water electrolysis cell, according to the present embodiment.

The water electrolysis cell according to the present embodiment is, for example, an alkaline water electrolysis cell 4, which utilizes an alkaline aqueous solution. In alkaline water electrolysis, an alkaline aqueous solution is used. Examples of the alkaline aqueous solution include aqueous potassium hydroxide solutions and aqueous sodium hydroxide solutions.

The alkaline water electrolysis cell 4 includes an anode 300 and a cathode 400. The alkaline water electrolysis cell 4 further includes an electrolysis chamber 70, a first space 50, and a second space 60. The anode 300 is provided in the first space 50. The cathode 400 is provided in the second space 60. The alkaline water electrolysis cell 4 includes a diaphragm 41. The diaphragm 41 is provided within the electrolysis chamber 70 and separates the first space 50 from the second space 60. At least one selected from the anode 300 and the cathode 400 includes the electrode catalyst 1.

The anode 300 may include the electrode catalyst 1. For example, the anode 300 may include a catalyst layer, and the electrode catalyst 1 may be included in the catalyst layer.

The cathode 400 may include the electrode catalyst 1. For example, the cathode 400 may include a catalyst layer, and the electrode catalyst 1 may be included in the catalyst layer.

The diaphragm 41 is a diaphragm for alkaline water electrolysis, for example.

The anode 300 may be disposed in contact with the diaphragm 41, or the anode 300 may be spaced apart from the diaphragm 41. The cathode 400 may be disposed in contact with the diaphragm 41, or the cathode 400 may be spaced apart from the diaphragm 41.

The alkaline water electrolysis cell 4 produces hydrogen and oxygen by electrolyzing an alkaline aqueous solution. An aqueous solution containing a hydroxide of an alkali metal or an alkaline earth metal may be supplied to the first space 50 of the alkaline water electrolysis cell 4. An alkaline aqueous solution may be supplied to the second space 60 of the alkaline water electrolysis cell 4. The production of hydrogen and oxygen is carried out by performing electrolysis while discharging an alkaline aqueous solution having a predetermined concentration from the first space 50 and the second space 60.

With any of the configurations described above, the alkaline water electrolysis cell 4 can have high durability; this is because at least one selected from the anode 300 and the cathode 400 includes the electrode catalyst 1.

(Fifth Embodiment)

Fig. 6 is a schematic cross-sectional view of another exemplary water electrolysis device, according to the present embodiment.

The water electrolysis device according to the present embodiment is, for example, an alkaline water electrolysis device 5, which utilizes an alkaline aqueous solution. The alkaline water electrolysis device 5 includes an alkaline water electrolysis cell 4 and a voltage applicator 40. The alkaline water electrolysis cell 4 is similar to the alkaline water electrolysis cell 4 of the fourth embodiment, and, therefore, descriptions thereof will be omitted.

The voltage applicator 40 is connected to an anode 300 and a cathode 400 of the alkaline water electrolysis cell 4. The voltage applicator 40 is a device that applies a voltage between the anode 300 and the cathode 400 in the alkaline water electrolysis cell 4.

With this configuration, the alkaline water electrolysis device 5 can have high durability.

EXAMPLES

The present disclosure will now be described in more detail with reference to examples. Note that the examples described below are merely illustrative of the present disclosure and are not to be construed as limiting the present disclosure.

(Sample 1)

(Preparation of Ni-Fe LDH)

A mixture including a Ni-Fe LDH and Ni particles was prepared in the following manner. First, a mixed solvent of water and ethanol (special grade reagent, manufactured by FUJIFILM Wako Pure Chemical Corporation) was prepared.

A volume ratio between the water and the ethanol was 2:3. Nickel chloride hexahydrate (manufactured by FUJIFILM Wako Pure Chemical Corporation) and iron chloride hexahydrate (manufactured by FUJIFILM Wako Pure Chemical Corporation) were dissolved in the mixed solvent such that a total concentration of the Ni ions and Fe ions became 1.0 M, and the ratio of the amount of substance of the Fe ions to the total amount of substance of the Ni ions and the Fe ions became 0.33. Note that "M" denotes "mol/$dm^3$". Furthermore, acetylacetone (ACAC), which was used as a chelating agent, was added such that the amount of substance of the acetylacetone became one-third of the total amount of substance of the Ni ions and the Fe ions. The obtained solution was stirred for 30 minutes.

Ni particles (manufactured by US Research Nanomaterials, Inc., a particle diameter of 40 nm) were added to the solution, with the mass of the Ni particles being equal to the mass of a Ni-Fe LDH that would be produced if all the Ni and Fe present in the solution ideally reacted. Next, propylene oxide (POX), which was used as a pH raising agent, was added to the solution containing the Ni-Fe LDH and the Ni particles such that the amount of substance of the POX became twice the amount of substance of the chloride ions present in the solution. The obtained solution was stirred for 1 minute. In such an instance, POX gradually scavenges hydrogen ions in the solution, and, therefore, the pH of the solution gradually increases. Accordingly, the obtained solution was allowed to stand for approximately three days, and subsequently, the mixture of the Ni-Fe LDH and the Ni particles, which was the target sample, was collected.

(Preparation of Sample for Evaluation of Catalytic Activity)

Nafion (registered trademark) was used as an organic binder. Nafion (a 5 wt% dispersion, manufactured by Aldrich Corporation) was mixed with the mixture of the Ni-Fe LDH and the Ni particles such that the mass ratio between the Ni-Fe LDH and Nafion became 5: 1, and the total mass became 21 mg. 1.03 mL of a mixed solvent of N,N-dimethylformamide (special grade reagent, manufactured by FUJIFILM Wako Pure Chemical Corporation) and ethanol (special grade reagent, manufactured by FUJIFILM Wako Pure Chemical Corporation) was added to the resulting mixture. Accordingly, a catalyst ink solution was prepared. A volume ratio between the N,N-dimethylformamide and the ethanol was 3: 1. The catalyst ink solution was sonicated with an ultrasonic homogenizer for 30 minutes. In this manner, a catalyst ink of Sample 1 was prepared. 10 μL of the catalyst ink of Sample 1 was added dropwise onto a rotating disk electrode, and the resultant was dried at room temperature. In this manner, a sample for evaluation of catalytic activity of Sample 1 was obtained.

(Sample 2)

A sample for evaluation of catalytic activity of Sample 2 was obtained in a manner similar to that for Sample 1, except that FAA-3 (registered trademark), manufactured by Fumatech, was used as an organic binder instead of Nafion, and 1.05 mL of the mixed solvent of N,N-dimethylformamide and ethanol was added. A volume ratio between the N,N-dimethylformamide and the ethanol was 3: 1. FAA-3 is an organic binder having a cationic functional group.

(Sample 3)

A sample for evaluation of catalytic activity of Sample 3 was obtained in a manner similar to that for Sample 1, except that Sustainion (registered trademark), manufactured by Dioxide Materials, was used as an organic binder instead of Nafion, and 1.05 mL of the mixed solvent of N,N-dimethylformamide and ethanol was added. A volume ratio between the N,N-dimethylformamide and the ethanol was 3: 1. Sustainion is an organic binder having a cationic functional group.

(Sample 4)

A sample for evaluation of catalytic activity of Sample 4 was obtained in a manner similar to that for Sample 1, except that Ketjen Black EC600JD, manufactured by Lion Specialty Chemicals Co., Ltd., was used as the support instead of Ni particles; the Ni-Fe LDH and the Ketjen black were mixed together such that the mass ratio between the Ni-Fe LDH and the Ketjen black became 2:1, and the total mass became 7.5 mg; and 1.03 mL of the mixed solvent of N,N-dimethylformamide and ethanol was added. A volume ratio between the N,N-dimethylformamide and the ethanol was 3: 1. Ketjen black (KB) has a conductivity, and a surface thereof is negatively charged.

(Sample 5)

A sample for evaluation of catalytic activity of Sample 5 was obtained in a manner similar to that for Sample 4, except that FAA-3, manufactured by Fumatech, was used as an organic binder, and 1.05 mL of the mixed solvent of N,N-dimethylformamide and ethanol was added. A volume ratio between the N,N-dimethylformamide and the ethanol was 3: 1.

(Evaluation of Overvoltage of Catalyst)

The overvoltage of the sample for evaluation of catalytic activity of each of Samples 1 to 5 was measured. The measurement was carried out by using a potentiostat VersaSTAT 4, manufactured by Princeton Applied Research, and a rotating electrode AFE3T050GC, manufactured by Pine Research. The currents produced by the anode reaction in the water electrolysis cell in the 1st cycle and the 120th cycle were measured by using a rotating disk electrode (RDE) method under the following measurement conditions. The anode reaction is an oxygen evolution reaction. The results are shown in Table 1.

[Measurement Conditions]

- Solution: a 1 M KOH solution
- Potential: 1.0 V to 1.65 V (vs. reversible hydrogen electrode (RHE))
- Potential sweep rate: 10 mV/sec
- Electrode rotation speed: 1500 revolutions per minute (rpm)

[Table 1]

| | Electrode catalyst | | | Overvoltage $V_1$ 1st cycle (mV) | Overvoltage $V_2$ 120th cycle (mV) | Overvoltage difference ($\Delta V=V_2-V_1$) (mV) |
|---|---|---|---|---|---|---|
| | LDH | Support | Organic binder | | | |
| Sample 1 | Ni-Fe LDH | Ni | Nafion | 262 | 265 | 3 |
| Sample 2 | Ni-Fe LDH | Ni | Sustainion | 324 | 394 | 70 |
| Sample 3 | Ni-Fe LDH | Ni | FAA-3 | 337 | 390 | 53 |
| Sample 4 | Ni-Fe LDH | KB | Nafion | 266 | 299 | 33 |
| Sample 5 | Ni-Fe LDH | KB | FAA-3 | 254 | 268 | 14 |

Table 1 shows the results of the measurement performed on the samples for evaluation of catalytic activity of Samples 1 to 5 to measure overvoltages. Table 1 shows an overvoltage Vi, an overvoltage $V_2$, and an overvoltage difference ($\Delta V=V_2-V_1$). The overvoltage $V_1$ is an overvoltage in the 1st cycle of the redox reaction. The overvoltage $V_2$ is an overvoltage in the 120th cycle of the redox reaction. The overvoltage difference is the difference between the overvoltage of the 1st cycle and the overvoltage of the 120th cycle.

The catalyst ink of Sample 1 had an overvoltage difference of 3 mV in the redox cycle. Thus, an increase in the overvoltage was inhibited. In the catalyst ink of Sample 1, degradation in catalytic performance was inhibited. That is, the catalyst ink of Sample 1 had high durability.

On the other hand, in the catalyst inks of Samples 2 to 5, the overvoltage increased. This is believed to be because, in the catalyst inks of Samples 2 to 5, a Coulomb force between the support and the organic compound and/or between the LDH and the organic compound was low, and, consequently, the LDH was separated from the support as a result of the application of voltage.

The results described above indicate that when an electrode catalyst for a water electrolysis cell includes a Ni-Fe LDH that contains a chelating agent, a support that contains a transition metal, and an organic compound that has an anionic functional group, the electrode catalyst can have high durability against the application of voltage.

Industrial Applicability

According to the present disclosure, the electrode catalyst for a water electrolysis cell can be used in water electrolysis devices.

Reference Signs List

1 Electrode catalyst
2 Water electrolysis cell
3 Water electrolysis device
4 Alkaline water electrolysis cell
5 Alkaline water electrolysis device
10 Catalyst
11 Support
12 Organic compound
20 Crystal structure
21 Host layer
22 Guest layer
30, 32 Catalyst layer
31 Electrolyte membrane
33, 34 Gas diffusion layer
40 Voltage applicator
41 Diaphragm
50 First space
60 Second space
70 Electrolysis chamber
100, 300 Anode
200, 400 Cathode

## Claims

1. An electrode catalyst for a water electrolysis cell, the electrode catalyst comprising:

   a catalyst, the catalyst being a layered double hydroxide that contains a chelating agent;
   a support that contains a transition metal; and
   an organic compound that has an anionic functional group.

2. The electrode catalyst for a water electrolysis cell according to Claim 1, wherein the anionic functional group includes a sulfonic acid ionic group.

3. The electrode catalyst for a water electrolysis cell according to Claim 1, wherein the anionic functional group includes a carboxylic acid ionic group.

4. The electrode catalyst for a water electrolysis cell according to Claim 1, wherein the organic compound includes a perfluorocarbon polymer having a sulfonic acid ionic group.

5. The electrode catalyst for a water electrolysis cell according to any one of Claims 1 to 4, wherein the layered double hydroxide contains Ni and Fe.

6. The electrode catalyst for a water electrolysis cell according to any one of Claims 1 to 5, wherein the transition metal includes Ni.

7. A water electrolysis cell comprising:

   an anode;

a cathode; and
an electrolyte membrane disposed between the anode and the cathode, wherein
at least one selected from the group consisting of the anode and the cathode includes the electrode catalyst according to any one of Claims 1 to 6.

**8.** The water electrolysis cell according to Claim 7, wherein the electrolyte membrane includes a proton exchange membrane.

**9.** The water electrolysis cell according to Claim 7, wherein the electrolyte membrane includes an anion exchange membrane.

**10.** A water electrolysis cell comprising:

a diaphragm that separates a first space from a second space;
an anode provided in the first space; and
a cathode provided in the second space, wherein
at least one selected from the group consisting of the anode and the cathode includes the electrode catalyst according to any one of Claims 1 to 6.

**11.** A water electrolysis device comprising:

the water electrolysis cell according to any one of Claims 7 to 10; and
a voltage applicator that applies a voltage between the anode and the cathode, the voltage applicator being connected to the anode and the cathode.

FIG. 1

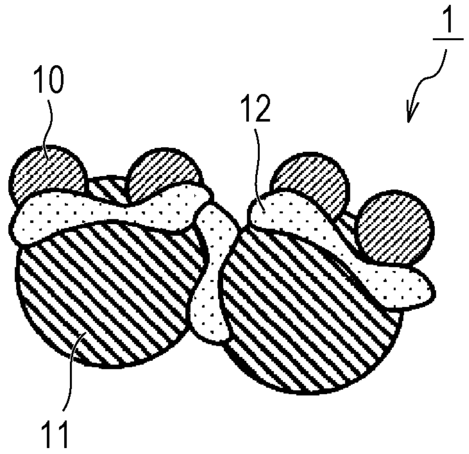


FIG. 2

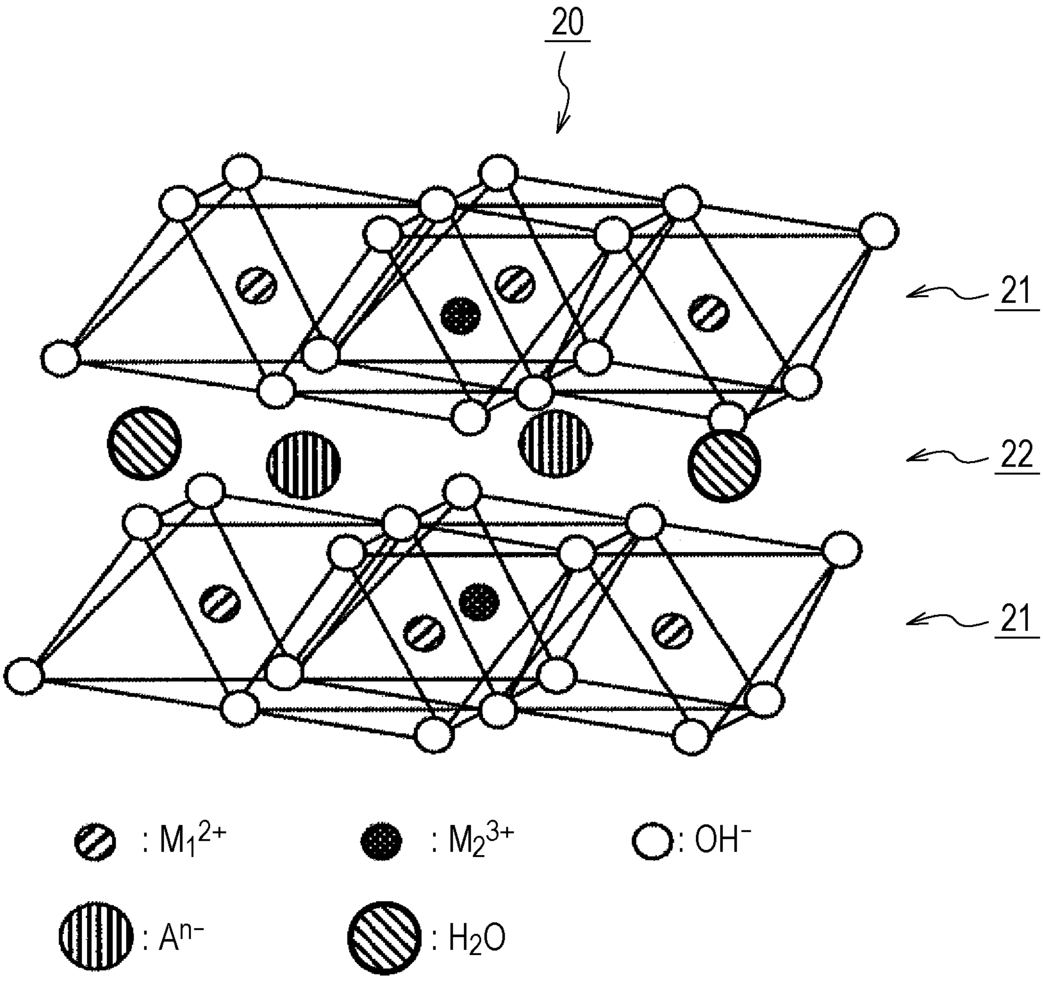

FIG. 3

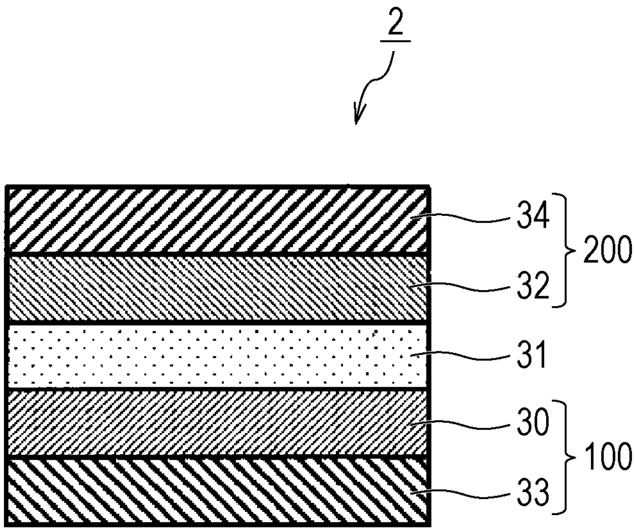


FIG. 4

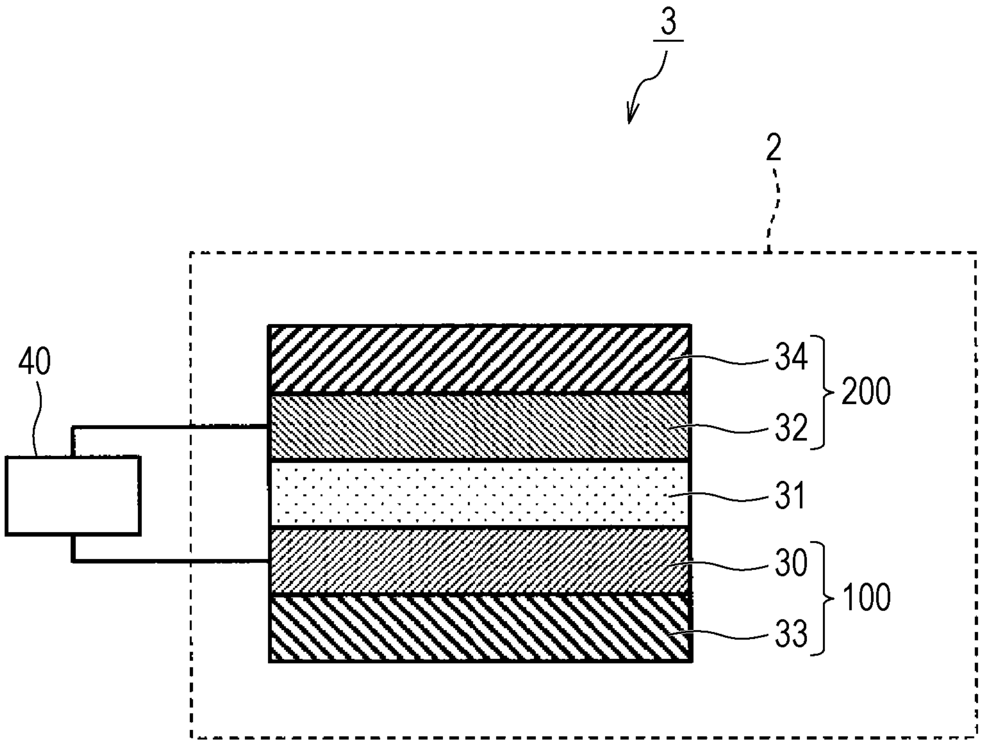

FIG. 5

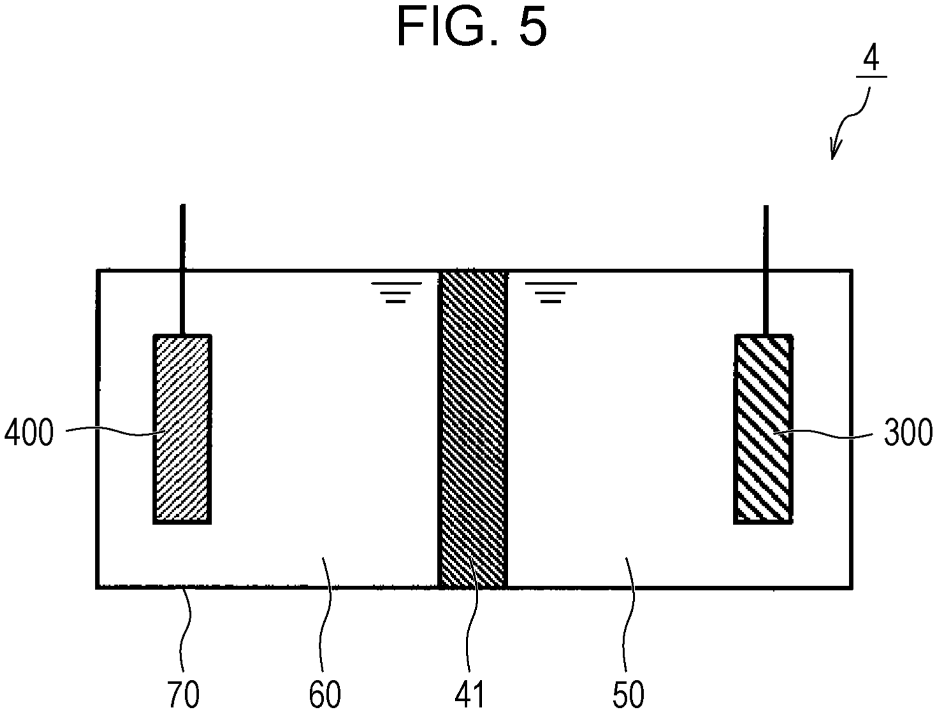


FIG. 6

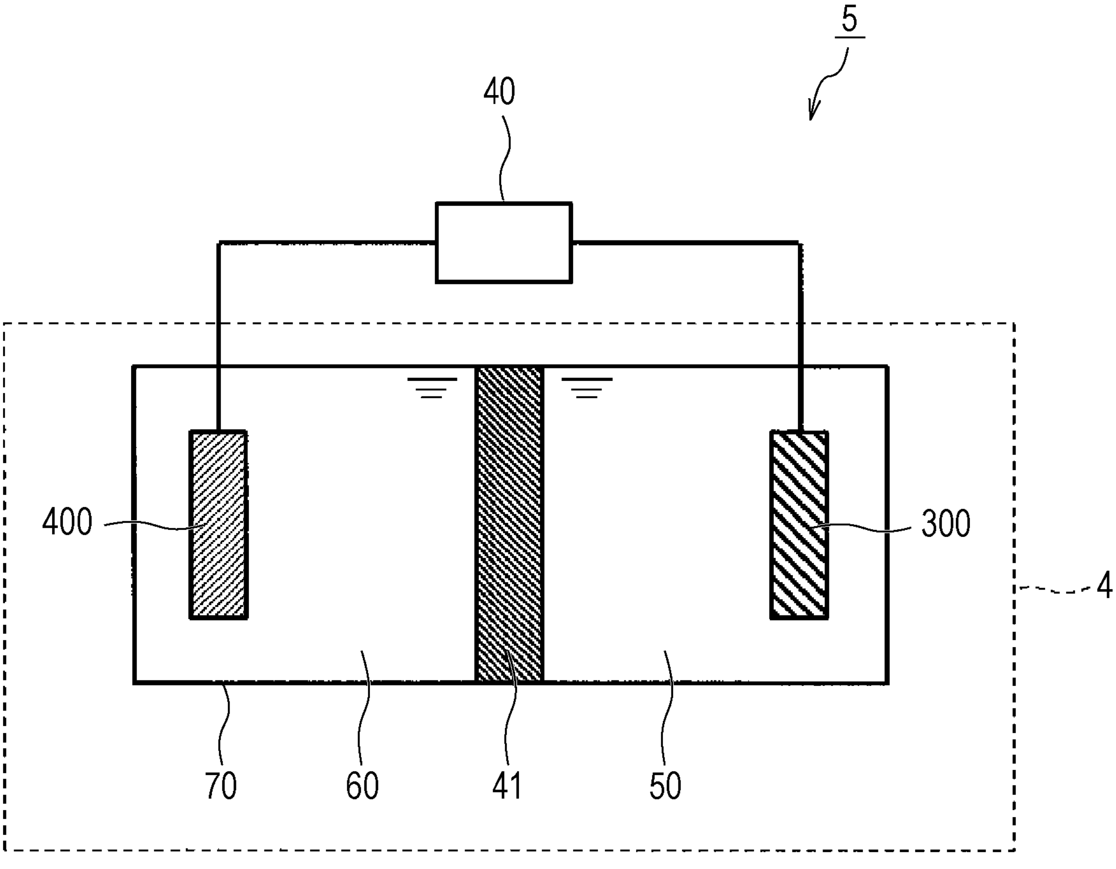

## INTERNATIONAL SEARCH REPORT

International application No.
PCT/JP2021/022952

A. CLASSIFICATION OF SUBJECT MATTER
Int. Cl. C25B11/091(2021.01)i, B01J23/755(2006.01)i, C01B3/02(2006.01)i, C25B1/04(2021.01)i, C25B9/00(2021.01)i, C25B11/054(2021.01)i, C25B11/055(2021.01)i, C25B11/061(2021.01)i, C25B11/071(2021.01)i
FI: C25B11/091, B01J23/755 M, C01B3/02 H, C25B1/04, C25B9/00 A, C25B11/054, C25B11/055, C25B11/061, C25B11/071

According to International Patent Classification (IPC) or to both national classification and IPC

B. FIELDS SEARCHED

Minimum documentation searched (classification system followed by classification symbols)
Int. Cl. C25B11/091, B01J23/755, C01B3/02, C25B1/04, C25B9/00, C25B11/054, C25B11/055, C25B11/061, C25B11/071

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | CN 103399064 A (HENGYANG NORMAL UNIVERSITY) 20 November 2013 (2013-11-20) | 1-11 |
| A | JP 2008-18414 A (TODA KOGYO CORP.) 31 January 2008 (2008-01-31) | 1-11 |
| A | CN 108940329 A (NANJING UNIVERSITY) 07 December 2018 (2018-12-07) | 1-11 |
| P, A | WO 2020/250590 A1 (PANASONIC INTELLECTUAL PROPERTY MANAGEMENT CO., LTD.) 17 December 2020 (2020-12-17) | 1-11 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02.08.2021 | 17.08.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/022952

| Patent Documents referred to in the Report | Publication Date | Patent Family | Publication Date |
|---|---|---|---|
| CN 103399064 A | 20.11.2013 | (Family: none) | |
| JP 2008-18414 A | 31.01.2008 | US 2007/0036713 A1<br>EP 1759764 A1<br>KR 10-2007-0019566 A | |
| CN 108940329 A | 07.12.2018 | (Family: none) | |
| WO 2020/250590 A1 | 17.12.2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **SEYEONG LEE et al.** Operational durability of three-dimensional Ni-Fe layered double hydroxide electrocatalyst for water oxidation. *Electrochimica Acta,* 2019, vol. 315, 94-101
- **JIANDE CHEN et al.** Interfacial Interaction between FeOOH and Ni-Fe LDH to Modulate the Local Electronic Structure for Enhanced OER Electrocatalysis. *ACS Catalysis,* 2018, vol. 8, 11342-11351